# EUROPEAN PATENT APPLICATION

(11) **EP 4 667 621 A1**
(43) Date of publication of application: **24.12.2025**
(21) Application number: 24382676.5
(22) Date of filing: 21.06.2024
(51) Int. Cl.: C25B 1/04, C25B 9/17, C25B 9/70, C25B 15/08

(54) **ELECTROLYZER**

(71) Applicant: Indox Energy Systems, S.L., 25320 Anglesola Lleida (ES)
(72) Inventor: RIUDALBAS CODINA, Angel, 25320 Angelsola (Lleida) (ES)
(74) Representative: Herrero & Asociados, S.L.

(57) **Abstract**

The present application relates to an electrolyzer. The electrolyzer comprises a plurality of cells (1) defining a cell stack (1), each cell (1) comprising first and second cavities, channels (2) for input of a liquid electrolyte into each cavity of each cell (1); output channels (31, 32) for output of hydrogen from the first cavities; and outlet channels (31, 32) for oxygen output from the second cavities, wherein each cell (1) defines a first half (A) and a second half (B), wherein the inlet channels (2) are located in the first half (A) and the outlet channels (31, 32) are located in the second half (B). This arrangement of the input and output channels improves the efficiency of the cells both individually and collectively, and reduces corrosion effects normally generated by hot spots.

## Description

### Object of the invention

The present invention relates to an electrolyzer, comprising a plurality of cells, so as to improve the efficiency of the cells both individually and collectively, and to reduce corrosion effects normally generated by hot spots.

### Background to the invention

An electrolyzer is a device that comprises a plurality of cells forming a battery and is capable of separating water molecules into their component oxygen and hydrogen atoms.

The bonds between the two elements are very stable and electrical energy is needed for this splitting to take place in a process called electrolysis.

A traditional cell stack has a fluid dynamic distribution in which there is usually only one inlet channel through which a liquid electrolyte circulates and feeds the cavities of each cell. Each cell usually comprises two cavities, one that generates H2 and one that generates O2.

In addition, the electrolyzer also comprises a H2 output channel and an O2 output channel, usually located opposite the input channel.

Inside each cell there is a central priority flow due to the arrangement of the inlet and outlet channels. The flow from both cavities is through the centre and the flow enters the cell stack on the same side of the cell stack as it exits with the H2 and O2 gases, leading to differences in pressure drop between the cells and more accentuated between the first and the last cell.

### Description of the invention

Therefore, an objective of the present invention is to provide an electrolyzer in which the efficiency of the cells is improved both individually and collectively, and corrosion effects normally generated by hot spots are reduced.

With the electrolyzer of the invention, the aforementioned disadvantages are solved, presenting other advantages that will be described below.

The electrolyzer according to the present invention is described in claim 1, and the dependent claims include additional features that are optional.

In particular, the electrolyzer comprises:
- a plurality of cells defining a stack of cells, each cell comprising a first and second cavities;
- channels for a liquid electrolyte to enter each cavity of each cell;
- outlet channels for the outflow of hydrogen from the first cavities; and
- outflow channels for oxygen outflow from the second cavities,
wherein each cell defines a first half and a second half, the input channels being arranged in the first half and the output channels being arranged in the second half.

Thus, a cross-flow is created between the inflow channels and the outflow channels between the flows in the first cavities and the second cavities.

This improves the efficiency of the cells both individually and collectively, and reduces corrosion effects normally generated by hot spots.

Preferably, the outlet channels extend the full length of the cell stack, and are joined to an outlet duct that also extends the full length of the cell stack.

In addition, the inlet channels also preferably extend across the entire cell stack.

According to a preferred embodiment, the inlet channels are positioned symmetrically and laterally offset with respect to a central transverse axis defined in the cell stack, and the outlet channels are positioned symmetrically and laterally offset with respect to a central transverse axis defined in the cell stack.

Preferably, the cells consist of discs, e.g. metal discs.

### Brief description of the drawings

For a better understanding of what has been explained above, some drawings are included in which, schematically and only by way of a non-limiting example, a practical case of embodiment is represented.

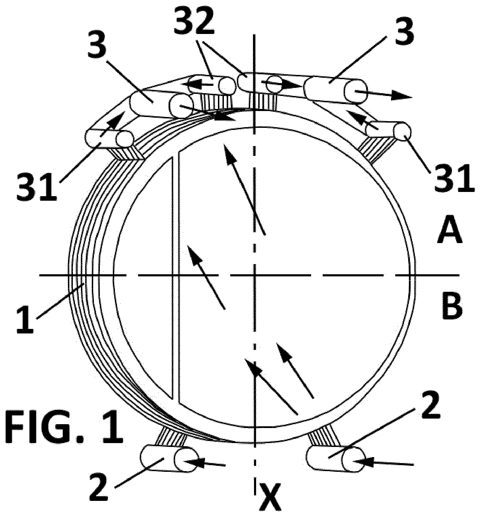

Figure 1 is a perspective sectional view of the electrolyzer in accordance with the present invention; and
Figure 2 is a partially sectional perspective view of the electrolyzer according to the present invention, showing the cell cavities.

### Description of a preferred embodiment

The figures show the electrolyzer according to the present invention, comprising a plurality of cells (1), which form a cell stack, each cell (1) comprising a first and second cavities (11, 12). The first cavities (11) accumulate hydrogen from the electrolysis produced in the electrolyzer and the second cavities (12) accumulate oxygen from the electrolysis produced in the electrolyzer.

The electrolyzer according to the present invention also comprises two inlet channels (2) of liquid electrolyte to each cavity (11, 12) of each cell (1).

Each cavity (11, 12) has two outlet channels (31, 32), which are connected to an outlet duct (3), for oxygen and hydrogen output to the outside of the electrolyzer.

As can be seen in the figures, the inlet channels (2) are located in one half (A) of the cell stack (1), in particular in the lower half according to the embodiment shown. In particular, the inlet channels (2) are positioned symmetrically and slightly laterally offset with respect to a central transverse axis (X) defined in the cell stack (1).

The outlet channels (31, 32) are arranged in the other half (B) of the cell stack (1), the upper half according to the embodiment shown, and are also symmetrically positioned and slightly offset laterally with respect to the central transverse axis (X) defined in the cell stack (1).

This arrangement generates a cross-flow between the two cavities (11, 12) of each cell (1), and a less centered fluid dynamic distribution is sought.

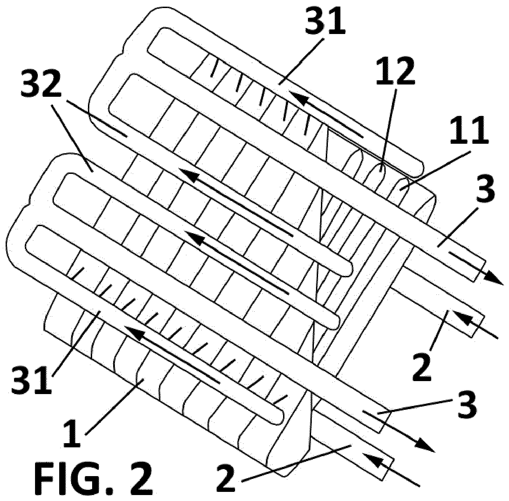

As can be seen in Figure 2, the input channels (2) extend along the entire length of the cell stack (1).

The outlet channels (31, 32) also extend along the entire length of the cell stack (1), carrying the flow to one side of the cell stack (1) opposite to the side where the inlet channel (2) is arranged, equalizing the pressure drop between all cells (1), and then rotate 180° so that the outlet end of the outlet duct (3) is on the same side of the cell stack (1) as the inlet end of the inlet channels (2).

The cells (1) are preferably formed from discs, e.g., metal discs, to form recesses for the connections between the cavities (11, 12) of each cell (1) and the inlet (2) and outlet channels (31, 32).

Although reference has been made to a specific embodiment of the invention, it is obvious to a person skilled in the art that the electrolyzer described is susceptible to numerous variations and modifications, and that all the details mentioned can be replaced by technically equivalent ones, without departing from the scope of protection defined by the appended claims.

## Claims

1. Electrolyzer, comprising:
- a plurality of cells (1) defining a stack of cells (1), each cell (1) comprising a first and second cavities (11, 12);
- channels (2) for a liquid electrolyte to enter each cavity (11, 12) of each cell (1);
- outlet channels (31, 32) for hydrogen outflow from the first cavities (11); and
- outlet channels (31, 32) for oxygen delivery from the second cavities (12), **characterized in that** each cell (1) defines a first half (A) and a second half (B), the input channels (2) being arranged in the first half (A) and the output channels (31, 32) being arranged in the second half (B).

2. Electrolyzer according to claim 1, wherein the outlet channels (31, 32) extend along the entire length of the cell stack (1) and are joined to an outlet conduit (3) which also extends along the entire length of the cell stack (1).

3. Electrolyzer according to claim 1 or 2, wherein the inlet channels (2) extend along the entire length of the cell stack (1).

4. Electrolyzer according to any one of the preceding claims, wherein the inlet channels (2) are symmetrically located and laterally offset with respect to a central transverse axis (X) defined in the cell stack (1).

5. Electrolyzer according to any one of the preceding claims, wherein the output channels (31, 32) are symmetrically located and laterally offset with respect to a central transverse axis (X) defined in the cell stack (1).

6. Electrolyzer according to any one of the preceding claims, wherein the cells (1) comprise discs.

7. Electrolyzer according to claim 6, wherein the discs forming the cells (1) are metallic.
